# EUROPEAN PATENT SPECIFICATION

(11) **EP 3 221 378 B1**
(45) Date of publication and mention of the grant of the patent: **02.01.2019**
(21) Application number: 15816911.0
(22) Date of filing: 18.11.2015
(51) Int. Cl.: C08G 59/24, C08G 59/50, C08G 59/68, C08G 59/72

(54) **ACCELERATOR COMPOSITION**
BESCHLEUNIGERZUSAMMENSETZUNG
COMPOSITION D'ACCÉLÉRATEUR

(30) Priority: 20.11.2014 US 201462082180 P
(43) Date of publication of application: 27.09.2017
(73) Proprietor: Dow Global Technologies LLC, Midland, MI 48674 (US)
(72) Inventor: QIAN, Huifeng, Pearland, TX 77584 (US); HUNTER, Gary A., Lake Jackson, TX 77566 (US); GULYAS, Gyongyi, Lake Jackson, TX 77566 (US)
(74) Representative: Raynor, John
(86) International application number: PCT/US2015/061243
(87) International publication number: WO 2016/081546

(56) References cited:
- WO-A1-02/00757
- US-A- 4 725 652
- US-A- 5 541 000
- US-A1- 2001 018 122

## Description

### FIELD

The present invention is related to a novel accelerator for fast cure epoxy- resin compositions and the use of such accelerator for thermosettable resin compositions such as curable epoxy resin compositions useful for manufacturing a cured thermoset article.

### INTRODUCTION

An "accelerator" or "catalyst" for a thermosettable resin such as an epoxy resin composition is defined as a compound or mixtures of compounds that catalyzes the curing reaction of an epoxide with hardeners, and more precisely, such "accelerator" accelerates the reaction, and makes it possible for the reaction to be conducted at a lower temperature or for a shorter time than compositions that do not contain the accelerator. The reactivity of amines, in general, decreases in the following order: aliphatic, cycloaliphatic and aromatic amines. There is always a need to speed up the curing reaction between a thermoset resin and an amine curing agent; however, the need is the most acute in the case when the slowest curing amine, that is, an aromatic amine, is used with an epoxy resin composition.

Due to the low reactivity between an epoxy resin and an aromatic amine hardener, a high cure temperature and long cure time are generally required to manufacture a high performance crosslinked polymer material. Increasing cure temperature and cure time, increases the processing cost and limits the application of aromatic amine hardeners in some important composite fabrication techniques, such as pultrusion, resin transfer molding (RTM), prepregging and compression molding.

In order to reduce the curing time and/or lower the curing temperature, many catalysts or accelerators are used for the curing of epoxy resins with amine hardeners, such as phenols, imidazoles, boron fluoride-amine complexes, zinc tetrafluoroborate, copper tetrafluoroborate, triphenyl phosphite, π-electron acceptors, and trialkyl sulfonium salts.

For example, U.S. Patent No. 5,541,000 discloses a cure accelerator compound containing a π-electron acceptor that can lower the cure exotherm peak temperature of a composition by 8-16 percent (%) (e.g., 19-28 °C) relative to a corresponding composition without the cure accelerator, as determined by differential scanning calorimetry (DSC) using a 10 °C/minute (°C/min) scan rate.

U.S. Patent No. 4,447,586 discloses an aqueous copper tetrafluoroborate solution that can accelerate curing of a curable composition containing an epoxy resin and a hindered aromatic diamine. However, the curing process described in the above patent requires at least one hour of curing time at 177 °C. To achieve less than an hour of curing time, the patent discloses that a cure temperature of 190-195 °C is needed.

U.S. Patent No. 4,554,342 discloses a trialkyl sulfonium salt containing anions of low nucleophilicity that can be used as an accelerator for epoxy and aromatic amine compositions. The accelerator taught in the above patent also requires long curing times at elevated temperatures such as a curing time of two hours at 80 °C followed by a curing time of two hours at 150 °C.

U.S. Patent No. 6,359,147 discloses chromium (III) carboxylates that can catalyze the polymerization of an epoxy with a carboxylic acid, an anhydride, an imide, a lactone and a carbonate ester; and that such catalysts can be used to produce prepolymers, polymers, and thermosets. However, the above patent does not teach the applicability of chromium (III) carboxylate s for accelerating the reaction between epoxides and amines.

None of the above prior art references disclose an accelerator that contains both a transition metal complex and a salt where the cation of the salt is a metal or an onium cation with an anion in a synergistic combination. In addition, none of the above prior art references disclose an accelerator designed for increasing the reactivity of an epoxy and an aromatic amine hardener that results in more than 20 % lower exotherm onset temperatures, as determined by DSC using a 10 °C/min scan rate, or less than an hour of cure time at 150-160 °C.

It is therefore desired to provide an accelerator, which can advantageously and easily speed up the reaction between an epoxy and an amine hardener, especially between an epoxy and an aromatic amine hardener; and which can be used in a curable formulation such that when the formulation is cured, the resulting cured thermoset retains a balance of performance properties including for example glass transition temperature (Tg) and mechanical properties.

### SUMMARY

One embodiment is directed to a synergistic accelerator for fast cure epoxy- resin compositions, wherein the accelerator composition includes at least two components, that is, a combination of: (i) a transition metal complex, and (ii) a salt; wherein the transition metal complex, component (i), includes (a) a transition metal ion and (b) a ligand; wherein the transition metal ion, component (a), can be chromium (III), Zn (II), or molybdenum (III); and wherein the ligand, component (b), can be a carboxylate ion derived from an organic acid such as octoate or 2-ethyl-hexanoate. For example, the transition metal complex can be chromium (III) octoate, zinc (II) octoate, or molybdenum (III) octoate.

The salt, component (ii) of the accelerator composition, includes (c) a cation wherein the cation includes a metal ion or an onium ion; and (d) an anion according to the claims. For example, the metal cation, component (c), of the salt may include a transition metal such as Cu, Co, Zn, Cr, Fe, Ni and the like; and the onium ion, component (c), of the salt can be for example an alkyl, aralkyl or aryl ammonium ion; or an alkyl, aralkyl or aryl phosphonium ion. The anion, component (d), of the salt can be for example BF₄⁻, PF₆⁻, AsF₆⁻, SbF₆⁻ and the like.

Another embodiment is directed to a curable epoxy resin composition including (A) at least one epoxy resin, (B) at least one hardener (for example, wherein the hardener is an amine such as diethyltoluenediamine (DETDA), and (C) at least one accelerator composition, wherein the accelerator composition comprises the above accelerator composition of the present invention. The use of the accelerator of the present invention in an epoxy resin composition can lead to extremely rapid cure of the epoxy resin composition while retaining other quality properties of the epoxy resin composition such as long pot life, good latency at room temperature (e.g., from about 20 °C to about 25 °C), low toxicity, low viscosity, and excellent mechanical properties. A facile method for determining how an accelerator speeds up the curing reaction between an epoxide and a hardener includes using DSC at 5 °C/min or 10 °C/min scan rates and comparing the heat flow-temperature curves of an accelerated system to a non-accelerated system.

For example, the exotherm peak temperature of a curable epoxy resin composition containing the cure accelerator can be lowered by over 53 °C (187 °C to 134°C, a 28 % reduction) relative to a corresponding composition without the cure accelerator. Under preferred accelerator loading conditions, for example (5% Cr(octoate)₃ and 3% Cu(BF₄)₂ in hardener), the exotherm peak temperature can be lowered by 72 °C (187 °C to 115 °C, a 39 % reduction). The above exotherm lowering effects can be determined using DSC at 5 °C/min scan rate. There is a remarkable and unexpected synergistic effect achieved by the combination of two components present in the accelerator of the present invention: (i) a transition metal complex and (ii) a salt where the cation of the salt is a metal or an onium cation with an anion. Either of the components (i) or (ii) alone does not produce a significant accelerating effect on the reactivity of an epoxy-amine composition. For example, a transition metal complex alone cannot accelerate the epoxy-amine reaction; and the salt alone, where the cation of the salt is a metal or an onium cation with an anion, cannot lower the exotherm peak temperature of a composition by more than 53 °C (28 %).

A curable composition including an epoxy resin compound and an amine curing agent; and the above accelerator of the present invention, can provide a dramatic acceleration effect on the curable composition. The dramatic acceleration of the cure process using the above accelerator is due to the synergistic effect of the two components (for example, a transition metal complex in combination with a salt where the cation of the salt is a metal or an onium cation with an anion) present in the accelerator composition. The accelerator with the above combination of components behaves differently from known accelerators. And, the exotherm peak temperature of a curable resin composition containing the above accelerator can be lowered, for example, by more than about 23 °C in one embodiment, and for example more than about 53 °C in another embodiment, relative to a corresponding resin composition without the accelerator. The phenomena of lowering the exotherm peak temperature of a curable resin composition by more than about 23 °C has not been previously achieved or reported with other known accelerators.

While the mechanism for the synergistic effect between component (i), the transition metal complex (for example chromium (III) carboxylate), and component (ii), the salt with anion, is still not completely understood; it is theorized that the transition metal (chromium (III)) of the complex provides unoccupied coordination sites to coordinate with the epoxide groups to initiate the curing process. Probably the cation portion of the salt also participates in this process. Then the anions stabilize the generated intermediates and promote the epoxide amine reaction. The accelerators with the above described components (i) and (ii) together can speed up an epoxy curing reaction more than either of components alone.

In an embodiment, the accelerator contains (i) a transition metal complex (e.g., a chromium (III), zinc (II), molybdenum (III) carboxylate, such as chromium (III) octoate or zinc (II) octoate, or molybdenum (III) octoate) and (ii) a salt where the cation of the salt is a metal or an onium cation with an anion (e.g., Zn(BF₄)₂ or Cu(BF₄)₂) can catalyze the reaction of an epoxy-amine combination, wherein the amine can include for example an arylaliphatic amine, an aliphatic amine, a heterocyclic amine, a cycloaliphatic amine, a polyetheramine an aromatic amine, and combinations thereof.

Another embodiment is directed to a process for preparing the above accelerator composition. Yet another embodiment is directed to a process for preparing the above curable composition or formulation. And other embodiments are directed to a cured thermoset product, such as a composite, manufactured from the above curable composition or formulation and a process therefor.

### BRIEF DESCRIPTION OF THE DRAWINGS

The following drawings illustrate non-limiting embodiments of the present invention. With regard to the following Figures, the differential scanning calorimetry (DSC) heat flow - temperature curves are recorded based on a scan rate of at 5 °C/min. Unless stated otherwise, the accelerator concentrations refer to weight percentages in the hardener; and the epoxide amine equivalent ratios are 1.
Figure 1 is a graphical illustration showing the exotherm peak of D.E.R.383/diethyltoluenediamine (DETDA) with accelerator Cu(BF₄)₂ and Cr(octoate)₃ as measured by DSC. In Figure 1, "3%Cr(octoate)₃ +3%Cu(BF₄)₂" refers to 3 weight percent (wt %) of Cr(octoate)₃ and 3%Cu(BF₄)₂ in DETDA hardener.
Figure 2 is a schematic illustration showing Tg of a cured polymer with various stoichiometric ratios of D.E.R.383/DETDA catalyzed by 1%Cu(BF₄)₂ and 1%Cr(octoate)₃. (The Tg is analyzed by DSC).
Figure 3 is a graphical illustration showing the dynamic mechanical thermal analysis (DMTA) of D.E.R.383/DETDA with accelerator 1%Cu(BF₄)₂ and 1%Cr(octoate)₃.
Figure 4 is a graphical illustration showing the exotherm peak of D.E.R.383/DETDA with accelerator 1%Zn(BF₄)₂ and 1%Cr(octoate)₃ as measured by DSC.
Figure 5 is a graphical illustration showing the exotherm peak of D.E.N.431/DETDA with accelerator 1%Cu(BF₄)₂ and 1%Cr(octoate)₃ as measured by DSC.
Figure 6 is a graphical illustration showing the exotherm peak and Tg of D.E.R.383/ANCAMINE® Z with accelerator 1%Zn(BF₄)₂ and 1%Cr(octoate)₃ as measured by DSC.

### DETAILED DESCRIPTION

Embodiments relate to providing an accelerator, which can significantly speed up the reaction between an epoxy and an amine hardener while still maintaining the excellent mechanical and chemical properties of the resulting thermoset. For example, embodiments relate to providing an epoxy resin composition using an aromatic amine hardener (e.g., DETDA) to enable the formation of high Tg cross-linked polymers with good chemical resistances. The crosslinked polymers using the aromatic amine hardeners can be used in general in a variety of composite processing technologies such as oil well casting, geothermal piping, chemical piping and tank applications, filament winding, resin transfer molding, prepregging, compression molding, and the like. The amine hardeners also exhibit a variety of beneficial properties, such as long pot life, good latency, low toxicity, low viscosity and insensitivity to moisture.

### Terms

By "fast cure" herein, with reference to curing a composition, means curing reaction of the epoxide with the hardeners can be conducted for a short time (e.g., from a few minutes to less than about 60 minutes) at cure temperatures up to 160 °C.

An "onset temperature" as determined from the DSC scans, herein means the intersection of tangents of the exothermic peak with the extrapolated baseline.

"A significant accelerating effect on the reactivity of an epoxy-aromatic amine composition" herein, with reference to curing a composition, means significantly lowering the temperature or time for curing a reaction of epoxide with hardeners. For instance, in Example 2 described herein below, the exotherm peak temperature of the curing reaction can be lowered by 72 °C (187 °C to 115 °C, a 39 % reduction), and the onset temperature of the curing reaction can be lowered by 54 °C (144 °C to 90 °C, a 37.5 % reduction).

"Pot life" herein means the amount of time it takes for an initial viscosity of a composition to double, or quadruple for lower viscosity (e.g., < 1000 mPa-s) products. Timing starts from the moment the components of the composition are mixed, and the viscosity is measured at room temperature. A "long pot life" herein, with reference to a composition, means the viscosity of the formulation, including the epoxy resin, the hardener and the accelerator, increases slowly. For instance, in Example 2 described herein below, the pot life of D.E.R.383/DETDA/Cu(BF₄)₂ and Cr(octoate)₃ is found to be over 3 hours (hr) and the gel time is found to be about 40 hr.

"Gel time" herein, with reference to curing a composition, means the mixture is incapable of flow and in molecular terms gel time refers to the point at which an infinite network is formed. The gel time of epoxy-resin composition is determined by Gardner Standard Model Gel Timers (gel time of mixture at 25 °C) and Gelnorm Gel Timer (gel time of mixture at 80 °C and 100 °C).

"Latency" herein, with reference to a hardener, means a hardener shows very low or limited reactivity with an epoxy at room temperature, but the hardener reacts with an epoxy at an elevated temperature. For instance, in Example 2 described herein below, the gel time of D.E.R.383/DETDA with accelerator [Cu(BF₄)₂ and Cr(octoate)₃] at 25 °C is about 40 hr but the gel time at 150 °C is only 59 s. This epoxy resin composition shows good latency.

The viscosity of a fluid is a measure of the fluid's resistance to gradual deformation by shear stress or tensile stress. "Low viscosity" herein, with reference to a composition, means that the viscosity of a composition is below a viscosity of at least 1000 mPa-s at 50 °C. For example, the viscosity of composition D.E.R.383/DETDA with accelerator Cu(BF₄)₂ and Cr(octoate)₃ shown in Example 2 is less than about 355 mPa-s at 50 °C.

"Excellent mechanical properties" herein, with reference to a composition, means high tensile strength, tensile modulus, tensile strain, fracture toughness and the like. For instance, in Example 1 described herein below, the composition of epoxy/aromatic amine /accelerators shows excellent mechanical properties, with a tensile modulus at
2.6 GPa, a tensile strength at 56 MPa, and a fracture toughness at 0.5 MPa·m^{1/2}.

In its broadest scope, the present invention includes an accelerator composition comprising at least two components: (i) a complex compound of (a) a transition metal and (b) a ligand; where the transition metal can be chromium (III), zinc (II), and Mo (III) and the ligand can be an oxygen donor ligand such as octoate or acetyl acetonate (e.g., chromium (III) octoate or chromium (III) acetyl acetonate) or a zinc (II) transition metal and an octoate ligand (e.g., Zn octoate); and (ii) a salt, where the cation of the salt, component (c), is a metal or an onium cation and where the anion of the salt, component (d), is an anion (e.g., Cu(BF₄)₂ or Zn(BF₄)₂). The novel accelerator of the present invention advantageously can be used as to speed up the curing reaction between an epoxy resin and an amine and used in a curable thermosetting resin composition.

Generally, the at least one transition metal complex of the accelerator composition can be a chromium (III) carboxylate, Cr(OOCR)₃ where R is an alkyl, aryl, alkaryl and aralkyl group of 2 to about 20 carbon atoms.

The accelerator contains a transition metal complex (i) which consist of a transition metal ion and a ligand. The transition metal ion can be chromium (III), Zn (II) or molybdenum (III). The ligand component of the accelerator composition may include oxygen donor ligands such as carboxylates. Carboxylates derive from carboxylic acids after they lose their hydrogen ions. Carboxylic acids include, for example, one or more of the following compounds: C₂-C₂₀, substituted and unsubstituted, straight and branch-chained, alkyl, aryl, and aralkyl carboxylic acids, such as acetic acid, propionic acid, hexanoic acid, heptanoic acid, octanoic acid or aromatic acids such as benzoic acid; and mixtures thereof. Oxygen donor ligands also include beta-dicarbonyl type compounds such as acetyl acetone. When acetyl acetone looses a hydrogen ion, an anion forms called acetyl acetonate which is the ligand component of the transition metal complex. The ligand component of the transition metal complex may also be nitrogen donor ligands such as ethylene diamine, diethylene triamine or mixed nitrogen and oxygen donors such as triethanol amine and the like.

In one preferred embodiment, the chromium (III) carboxylate compound useful for the present invention may include chromium (III) octoate, chromium (III) 2-ethylhexanoate, chromium (III) acetate, chromium (III) heptanoate, chromium (III) acetylacetonate, zinc (II) octoate or Zn (II) 2-ethylhexanoate, molybdenum (III) 2-ethylhexanoate and mixtures thereof. The use of formulated chromium (III) octoate such as the commercially available (Dimension Technology Chemical Systems) Hycat 3000S is also suitable. It is known from the manufacturer that Hycat 3000 S contains an activated
Cr (III) carboxylate along with phenolic and amine components.

Generally, the amount of transition metal complex compound used in the present invention, may be for example, from 0.01 wt % to about 15 wt % in one embodiment, from about 0.05 wt % to about 10 wt % in another embodiment; from about 0.1 wt % to about 5 wt % in still another embodiment; and from about 0.5 wt % to about
2.5 wt % in yet another embodiment, based on the total weight of the resin-hardener-accelerator composition. When concentration of the transition metal complex is less than the above concentrations (e.g., 0.01 wt %), the compound cannot speed up the epoxy-amine reaction.

The accelerator contains, as component (ii), a salt where the cation of the salt is a metal or an onium cation and the anion of the salt is a anion. The metal can be lithium, sodium, magnesium, calcium, aluminum, iron, cobalt, nickel, copper, zinc, tin, antimony, cadmium, lead, bismuth and the onium ion can be alkyl, aralkyl or aryl ammonium or phosphonium ion. The anion of the salt is, BF₄⁻, PF₆⁻, AsF₆⁻, SbF₆⁻, FeCl₄⁻, SnCl₆⁻, BiCl₅⁻, AlF₆⁻, GaCl₄⁻, InF₄⁻, TiF₆⁻, ZrF₆⁻, or ClO₄⁻. (CH₃)₂(C₆H₅)₂B⁻, (C₆H₅)₄B⁻, and (C₄H₇)₄B⁻. The salts useful in the present invention may or may not contain crystalline water. In one preferred embodiment, the salt useful for the present invention may include Cu(BF₄)₂ or Zn(BF₄)₂, or mixtures thereof.

Generally, the amount of salt useful in the present invention, may be for example, from 0.01 wt % to about 15 wt % in one embodiment, from about 0.05 wt % to about 10 wt % in another embodiment; from about 0.1 wt % to about 5 wt % in still another embodiment; and from about 0.5 wt % to about 2.5 wt % in yet another embodiment, based on the total weight of the resin-hardener-accelerator composition. When the concentration of the salt is less than the above described concentrations (e.g., < 0.01 wt %), the compound cannot speed up the epoxy-amine reaction. However, the compound cannot dissolve in an epoxy-amine composition when the concentration of the compound is higher than the above described concentration (e.g., > 15 %).

In another embodiment, the stoichiometric ratio of the chromium (III) carboxylate, component (i) in the accelerator, and the salt, component (ii) in the accelerator, ranges from about 0.01:1 to about 100:1, preferably from 0.1:10 to about 25:1, more preferably from about 1:10 to bout 10:1.

The optional component that can be used to form the accelerator complex includes any solubilizing agent, solvent or diluents which is essentially inert to component (i) and (ii) at ambient or room temperature. Suitable such solvents or diluents include, for example, alcohols, esters, glycol ethers, ketones, aliphatic and aromatic hydrocarbons, polyalkylene glycols, polyalkylene glycol monoethers, combinations thereof and the like. Particularly suitable such solvents or diluents include, for example, methanol, ethanol, propanol, isopropanol, n-butanol, isobutanol, tertiary butanol, tertiary amyl alcohol, glycerin, acetone, methyl ethyl ketone, methyl isobutyl ketone, butylene glycol methyl ether, ethylene glycol methyl ether, ethylene glycol ethyl ether, ethylene glycol n-butyl ether, ethylene glycol phenyl ether, diethylene glycol n-butyl ether, diethylene glycol ethyl ether, diethylene glycol methyl ether, propylene glycol methyl ether, propylene glycol ethyl ether, propylene glycol n-butyl ether, propylene glycol phenyl ether, dipropylene glycol methyl ether, dipropylene glycol n-butyl ether, tripropylene glycol methyl ether, polyethylene glycol, polypropylene glycol, poly(ethylene glycol) methyl ether, and any combination thereof; and the like. The use of water is not preferred in the present invention.

Generally, the amount of solvent or diluent compound used in the present invention may be for example, from 0 wt % to about 20 wt % in one embodiment, from about 0.01 wt % to about 10 wt % in another embodiment, and from 0.1 wt % to about 5 wt % in still another embodiment, and from 0.1 wt % to about 2 wt % in yet another embodiment, based on the total weight of the resin-hardener-accelerator composition.

Generally, the accelerator composition of the present invention is produced by admixing a transition metal complex (component (i)), a salt (component (ii))where the cation of the salt is a metal or an onium cation and the anion of the salt is an anion, and (iii) optionally, any other optional components as desired and described above.

The process used for preparing the accelerator of the present invention includes blending or mixing the accelerator components into the hardener or into the epoxy resin or into the epoxy resin hardener mixture. The preferred process is mixing the accelerator components into the hardener. During the mixing process optional solvents might be used to facilitate the dissolution of the components of the accelerator with the aim of obtaining a homogeneous formulation or a homogeneous hardener accelerator mixture or a homogeneous epoxide accelerator mixture.

The process used for preparing the accelerator of the present invention includes blending or mixing the above-described transition metal complex, the above-described salt, and any other optional components at a temperature from about -10 °C to about 100 °C in one embodiment, from about 10 °C to about 80 °C in another embodiment, and from about 0 °C to about 60 °C in still another embodiment

For example, the process can be carried out at a pressure of from about 1 psig (6.9 kPa) to about 150 psig (1,034.2 kPa) in one embodiment; from about 5 psig (34.5 kPa) to about 80 psig (551,6 kPa) in another embodiment; and from about 10 psig (68.9 kPa) to about 20 psig (137.9 kPa) in still another embodiment.

The time of the process for producing the accelerator composition may be generally from about 0.01 hr to about 20 hr in one embodiment, from about 0.1 hr to about 10 hr in another embodiment, and from 1 hr to about 2 hr in still another embodiment.

The preparation of the accelerator composition of the present invention, and/or any of the steps thereof, may be a batch or a continuous process. The equipment employed to carry out the reaction includes equipment known to those skilled in the art.

The accelerator composition product prepared by the process of the present invention is a novel composition with synergistic, unexpected and unique properties. For example, it has been found that the accelerator of the present invention can lead to extremely rapid cure of epoxy-amine while retaining other properties such as the long pot life, good latency at room temperature, low toxicity, low viscosity, chemical resistance and excellent mechanical properties. Surprisingly, in one embodiment, the accelerator of the present invention can lower the exotherm peak temperature of curable epoxy-aromatic amine composition by 72 °C (187 °C to 115 °C, 39 % reduction).

As aforementioned, in one embodiment of the present invention the accelerator can be used in epoxy resin formulations which are typically cured using a conventional curing agent to produce a cured product or thermoset. However, the preferred embodiment of the present invention is to accelerate the curing reaction between an epoxy resin and an amine curing agent. For example, the curable epoxy resin composition containing the accelerator may include: (A) at least one epoxy resin; (B) at least one hardener or curing agent such as an amine; and (C) the accelerator of the present invention; and (d) optionally, any other desired additive.

The curable formulation of the present invention includes at least one epoxy resin as component (A). The epoxy resins used herein may be monomeric, oligiomeric, or polymeric compounds containing at least two epoxide groups. The epoxy resin may be aliphatic, cycloaliphatic, aromatic, cyclic, heterocyclic or mixtures thereof. The epoxy resin may be saturated or unsaturated. The epoxy resins may be substituted or unsubstituted. An extensive enumeration of epoxy resins useful in the present invention is found in Lee, H. and Neville, K., "Handbook of Epoxy Resins," McGraw-Hill Book Company, New York, 1967, Chapter 2, pages 257-307;

The epoxy resins, used in embodiments disclosed herein of the present invention, may vary and include conventional and commercially available epoxy resins. The epoxy resin component of the resin composition used herein may include a single epoxy resin compound used alone or a mixture of two or more epoxy compounds used in combination. The epoxy resin, also referred to as a polyepoxide, may be a product that has, on average, more than one unreacted epoxide unit per molecule. In choosing epoxy resins for compositions disclosed herein, consideration should be given to properties of the final product, and to viscosity and other properties that may influence the processing of the resin composition.

Suitable conventional epoxy resin compounds utilized in the composition of the present invention may be prepared by processes known in the art, such as for example, a reaction product based on the reaction of an epihalohydrin and (1) a phenol or a phenol type compound, (2) an amine, or (3) a carboxylic acid. Suitable conventional epoxy resins used herein may also be prepared from the oxidation of unsaturated compounds. For example, epoxy resins used herein may include reaction products of epichlorohydrin with polyfunctional alcohols, phenols, bisphenols, halogenated bisphenols, hydrogenated bisphenols, novolac resins, o-cresol novolacs, phenol novolacs, polyglycols, polyalkylene glycols, cycloaliphatics, carboxylic acids, aromatic amines, aminophenols, or combinations thereof. The preparation of epoxy compounds is described for example in Kirk- Othmer, Encyclopedia of Chemical Technology, 3rd Ed., Vol. 9, pp 267-289.

In one embodiment, suitable phenol, phenol-type or polyhydric phenol compounds useful for reacting with an epihalohydrin to prepare an epoxy resin include, for example, the polyhydric phenol compounds having an average of more than one aromatic hydroxyl group per molecule such as, for example, dihydroxy phenols; biphenols; bisphenols such as bisphenol A, bisphenol AP (1,1-bis(4-hydroxyphenyl)-1-phenyl ethane), bisphenol F, or bisphenol K; halogenated biphenols such as tetramethyl-tetrabromobiphenol or tetramethyltribromobiphenol; halogenated bisphenols such as tetrabromobisphenol A or tetrachlorobisphenol A; alkylated biphenols such as tetramethylbiphenol; alkylated bisphenols; trisphenols; phenol-aldehyde novolac resins (i.e., the reaction product of phenols and simple aldehydes, preferably formaldehyde) such as phenol-formaldehyde novolac resins, alkyl substituted phenol-formaldehyde resins, phenol- hydroxybenzaldehyde resins, alkylated phenol-hydroxybenzaldehyde resins, or cresol-hydroxybenzaldehyde resins; halogenated phenol-aldehyde novolac resins; substituted phenol-aldehyde novolac resins; phenol-hydrocarbon resins; substituted phenol-hydrocarbon resins; hydrocarbon-phenol resins; hydrocarbon-halogenated phenol resins; hydrocarbonalkylated phenol resins; resorcinol; catechol; hydroquinone; dicyclopentadiene-phenol resins; dicyclopentadiene-substituted phenol resins; or combinations thereof.

In another embodiment, suitable amines useful for reacting with an epihalohydrin to prepare an epoxy resin include, for example, diaminodiphenylmethane, aminophenol, xylene diamine, anilines, or combinations thereof.

In still another embodiment, suitable carboxylic acids useful for reacting with an epihalohydrin to prepare an epoxy resin include, for example, phthalic acid, isophthalic acid, terephthalic acid, tetrahydro- and/or hexahydrophthalic acid, endomethylenetetrahydrophthalic acid, isophthalic acid, methylhexahydrophthalic acid, or combinations thereof.

A few non-limiting embodiments of the epoxy resin useful in the present invention include, for example, aliphatic epoxides prepared from the reaction of epihalohydrins and polyglycols such as trimethylpropane epoxide; diglycidyl-1,2-cyclohexane dicarboxylate, or mixtures thereof; diglycidyl ether of bisphenol A; diglycidyl ether of bisphenol F; resorcinol diglycidyl ether; triglycidyl ethers of para-aminophenols; halogen (for example, chlorine or bromine)-containing epoxy resins such as diglycidyl ether of tetrabromobisphenol A; epoxidized phenol novolac; epoxidized bisphenol A novolac; an oxazolidone-modified epoxy resin; an epoxy-terminated polyoxazolidone; and mixtures thereof.

Suitable commercially available epoxy resin compounds utilized in the composition of the present invention may be for example, epoxy resins commercially available from The Dow Chemical Company such as the D.E.R. ™ 300 series, the D.E.N. ™ 400 series, the D.E.R.™ 500 series, the D.E.R.™ 600 series and the D.E.R.™ 700 series of epoxy resins. Examples of bisphenol A based epoxy resins useful in the present invention include commercially available resins such as D.E.R.™ 300 series and
D.E.R. ™ 600 series, commercially available from The Dow Chemical Company. Examples of epoxy novolac resins useful in the present invention include commercially available resins such as D.E.N. ™ 400 series, commercially available from The Dow Chemical Company.

For example, as one illustrative embodiment of the present invention, the epoxy resin may be a liquid epoxy resin, such as D.E.R. 383 a diglycidylether of bisphenol A (DGEBA) having an epoxide equivalent weight (EEW) of from about 175 to about 185, a viscosity of about 9.5 Pa-s and a density of about 1.16 g/cc. Other commercial epoxy resins that can be used for the epoxy resin component can be D.E.R. 330, D.E.R. 354, D.E.R. 332, or mixtures thereof.

Other suitable epoxy resins useful as component (I) are disclosed in, for example, U.S. Patent Nos. 3,018,262;7,163,973; 6,887,574; 6,632,893; 6,242,083; 7,037,958; 6,572,971; 6,153,719; and 5,405,688; PCT Publication WO 2006/052727; U.S. Patent Application Publication Nos. 20060293172 and 20050171237, Examples of epoxy resins and their precursors suitable for use in the compositions of the present invention are also described, for example, in U.S. Patent Nos. 5,137,990 and 6,451,898,

Preferred examples of the epoxy resin which can be utilized in the composition of the present invention include both aliphatic and aromatic epoxy resin with at least 2 epoxide groups per molecule. A few non-limiting examples of preferred epoxy resin compounds useful in preparing the curable epoxy resin formulation may include, for example, but are not limited to, bisphenol A, bisphenol F, phenol novolac, cycloaliphatic, biphenol epoxy resins, divinylarene dioxides; addition products of polyhydric alcohols and epichlorohydrin; and mixtures thereof.

In general, the concentration of the epoxy resin compound used in the present invention may range generally from about 1 wt % to about 99 wt % in one embodiment, from about 10 wt % to about 90 wt % in another embodiment, from about 30 wt % to about 90 wt % in still another embodiment, and from about 40 wt % to about 85 wt % in yet another embodiment, based on the total weight of the components in the resin composition.

In general, the curing agent (also referred to as a hardener or crosslinking agent), component (B), is blended with the epoxy resin, component (A), and the accelerator described above is added to the blend to prepare the curable composition or formulation of the present invention. The curable formulation can then be cured to form a cured product or thermoset.

In a preferred embodiment, the curing agent useful in the present invention includes aromatic amines, arylaliphatic amines, aliphatic amines, heterocyclic amines, cycloaliphatic amines, polyetheramines, and combinations thereof. For example, the aromatic amine hardeners may include those aromatic compounds which have two or more primary or secondary amino groups attached directly to carbon atoms of an aromatic ring structure. Representative examples of aromatic amine hardeners useful in the curable composition include, but are not limited to, diethyltoluenediamine; 4,4'-diaminodiphenyl ether; 3,3'-diaminodiphenyl sulfone; 1,2-, 1,3-, and 1,4-benzenediamine; bis(4-aminophenyl)methane; bis(4-aminophenyl)sulfone; 1,3-xylenediamine, 1,2-diamino-3,5-dimethyl benzene; 4,4'-diamino-3,3'-dimethylbiphenyl; 4,4'-methylenebis(2,6-dimethylaniline); 1,3-bis-(m-aminophenoxy)benzene; 9,9-bis(4-aminophenyl)fluorene,3,3'-diaminodiphenylsulfone; 4,4'-diaminodiphenylsulfide; 1,4-bis(p-aminophenoxy)benzene, 1,4-bis(p-aminophenoxy)benzene,1,3-propanediol-bis(4-aminobenzoate); and mixtures thereof.

Examples of arylaliphatic amines useful in the present invention include, but are not limited to, m-xylylenediamine (MXDA); p- xylylenediamine; and mixtures thereof.

Examples of aliphatic amines useful in the present invention include, but are not limited to ethylenediamine (EDA); diethylenetriamine (DETA); triethylenetetramine (TETA); trimethyl hexane diamine (TMDA); hexamethylenediamine (HMDA); N-(2-aminoethyl)-1,3-propanediamine (N3-Amine); N,N'-1,2-ethanediylbis-1,3-propanediamine (N4-amine); dipropylenetriamine; and mixtures thereof.

Examples of heterocyclic amines useful in the present invention include, but are not limited to, N-aminoethylpiperazine (NAEP); 3,9-bis(3-aminopropyl)2,4,8, 10-tetraoxaspiro(5,5)undecane; and mixtures thereof.

Examples of cycloaliphatic amines useful in the present invention include, but are not limited to, 1,3-bisaminocyclohexylamine (1,3-BAC); isophorone diamine (IPD); 4,4'- methylenebiscyclohexanamine; bis-(p-aminocyclohexyl) methane (PACM) and mixtures thereof.

Examples of polyetheramines useful in the present invention include, but are not limited to, polyetheramines where the alkoxy group is an oxyethylene, oxypropylene, oxy- 1 ,2-butylene, oxy-1,4-butylene or a co-polymer thereof. For example, the polyetheramines useful in the present invention may include, but are not limited to, 4,7-dioxadecane-1,10-diamine; 1-propanamine,2,1-ethanediyloxy))bis(diaminopropylated diethylene glycol) (ANCAMINE® 1922A); poly(oxy(methyl-1,2-ethanediyl)); alpha-(2-aminomethylethyl)omega-(2-aminomethylethoxy) (JEFFAMINE® D-230, D-400); triethyleneglycoldiamine and oligomers (JEFFAMINE® XTJ-504, JEFFAMINE® XTJ-512); poly(oxy(methyl-1,2-ethanediyl)),alpha,alpha'-(oxydi-2,1-etha nediyl)bis (omega- (aminomethylethoxy)) (JEFFAMINE® XTJ-511); bis(3-aminopropyl)polytetrahydrofuran 350; bis(3 aminopropyl)polytetrahydrofuran 750; poly(oxy(methyl-1,2-ethanediyl)); a-hydro-w-(2-aminomethylethoxy) ether with 2- ethyl-2-(hydroxymethyl)-1,3-propanediol (JEFFAMINE® T-403); diaminopropyl dipropylene glycol; and mixtures thereof.

Generally, the amount of curing agent used in the curable formulation of the present invention will depend on the enduse of the curable composition. For example, as one illustrative embodiment, the concentration of the curing agent can be generally from about 1 wt % to about 99 wt % in one embodiment, from about 5 wt % to about 80 wt % in another embodiment; and from about 15 wt % to about 60 wt % in still another embodiment; based on the weight of the components in the curable formulation.

Generally, in one preferred embodiment, the amount of curing agent used in the curable formulation of the present invention can be for example from about 0.7 equivalents per epoxy equivalent to about 1.8 equivalents per epoxy equivalent, and from about 0.9 equivalents per epoxy equivalent to about 1.3 equivalents per epoxy equivalent in another embodiment.

In preparing the curable resin formulation of the present invention, the accelerator composition described above is added to the resin formulation as component (C). The accelerator is useful in the present invention to facilitate and speed up the reaction between an epoxy resin and an amine curing agent.

Generally, the amount of accelerator used in the curable composition may be for example, from 0.01 wt % to about 15 wt % (based upon the weight of the entire composition) in one embodiment, from about 0.05 wt % to about 5 wt % in another embodiment; from about 0.1 wt % to about 2 wt % in still another embodiment; and from about 0.4 wt % to about 1 wt % in yet another embodiment. The accelerator level can be adjusted to allow adequate processing in the final application.

Other optional compounds that may be added to the curable composition of the present invention may include compounds that are normally used in resin formulations known to those skilled in the art for preparing curable compositions and thermosets. For example, the optional components may comprise compounds that can be added to the composition to enhance application properties (e.g., surface tension modifiers or flow aids), reliability properties (e.g., adhesion promoters) the reaction rate, the selectivity of the reaction, and/or the catalyst lifetime.

Other optional compounds or additives that may be added to the curable composition of the present invention may include, for example, other co-catalysts, de-molding agents; a solvent to lower the viscosity of the formulation further, other resins such as a phenolic resin that can be blended with the other ingredients in the curable formulation, adduct curing agents, fillers, pigments, toughening agents, flow modifiers, adhesion promoters, diluents, stabilizers, plasticizers, catalyst de-activators, flame retardants, and mixtures thereof.

Generally, the amount of other optional components or additives, when used in the present invention, may be for example, from 0 wt % to about 70 wt % in one embodiment, from about 0.01 wt % to about 40 wt % in another embodiment; from about 0.1 wt % to about 10 wt % in still another embodiment; and from about 0.2 wt % to about
5 wt % in yet another embodiment.

The process for preparing the curable formulation of the present invention includes admixing (A) an epoxy resin compound; (B) the curing agent; (C) the accelerator described above; and (D) optionally, any other optional ingredients as desired and described above. Above components can be added to the mixture in any order. For example, the preparation of the curable resin formulation of the present invention is achieved by blending, in known mixing equipment, the above-described epoxy resin, the above-described accelerator, the above-described curing agent, and optionally any other desirable additives. Any of the above-mentioned optional additives, such as toughening agents, flow modifiers, or adhesion modifiers, and the like, may be added to the composition during the mixing or prior to the mixing to form the formulation. In another embodiment during the preparation of the curable resin formulation of the present invention, the accelerator (C) described above can first be mixed with the curing agent (B) and then with the epoxy resin (A) followed by mixing in any optional additives.

All the compounds of the curable formulation are typically mixed and dispersed at a temperature enabling the preparation of an effective curable epoxy resin formulation having the desired balance of properties for a particular application. For example, the temperature during the mixing of all components may be generally from about -10 °C to about 150 °C in one embodiment, from about 0 °C to about 80 °C in another embodiment, from about 0 °C to about 60 °C in still another embodiment, and from about
0 °C to about 25 °C in yet another embodiment. Lower mixing temperatures help to minimize reaction of the epoxide and curing agent in the composition to maximize the pot life of the composition.

The preparation of the curable formulation of the present invention, and/or any of the steps thereof, may be a batch or a continuous process. The mixing equipment used in the process may be any vessel and ancillary equipment well known to those skilled in the art.

Some of the benefits of the curable formulation may include for example, low viscosity, long pot life, good latency, high Tg and excellent mechanical properties. For example, the curable epoxy formulation prepared by the above process advantageously exhibits a low viscosity for example a viscosity of less than or equal to (≤) about
2,000 mPa-s at 25 °C. Generally, the viscosity of curable formulation can be from about 500 mPa-s to about 20,000 mPa-s in one embodiment, from about 500 mPa-s to about
10 000 mPa-s in another embodiment, and from about 500 mPa-s to about 5,000 mPa-s in still another embodiment at 25 °C.

Also, for example, the curable formulation prepared by the above process using the accelerator of the present invention advantageously exhibits a long pot life such as greater than or equal to (≥) about 40 hr at 25 °C. Generally, the pot life of the curable formulation can be from about 0.1 hr to about 60 hr at 25 °C in one embodiment, from about 1 hr to about 40 hr at 25 °C in another embodiment, and from about 3 hr to about 20 hr at 25 °C in still another embodiment.

The curable formulation, when cured, endows the cured thermosets such as fiber reinforced composites made from the curable formulation with excellent flexibility, impact resistance, chemical resistance and other properties such as moisture resistance which can be attributable to the presence of the accelerator in the curable epoxy resin-amine composition of the present invention. The properties of the cured thermoset product are discussed in more detail herein below.

Another embodiment of the present invention includes curing the curable resin formulation discussed above to form a thermoset or cured article. For example, the curing of the thermosettable composition or curable resin formulation may be carried out at a predetermined temperature and for a predetermined period of time sufficient to cure the resin composition.

For example, the temperature of curing the formulation may be generally from about 30 °C to about 180 °C in one embodiment; from about 80 °C to about 170 °C in another embodiment; and from about 120 °C to about 160 °C in still another embodiment; and the curing time may be chosen between about 10 s to about 4 hr in one embodiment, between about 2 minutes (min) to about 2 hr in another embodiment, and between about 2 min to about 1 hr in still another embodiment. Below a period of time of about 10 s, the time may be too short to ensure sufficient reaction under conventional processing conditions; and above about 4 hr, the time may be too long to be practical or economical.

The curable formulation of the present invention having as one component the accelerator of the present invention (the accelerator complex containing both (i) a transition metal complex (e.g., chromium (III) octoate) and (ii) a salt where the cation of the salt is a metal or an onium cation with an anion (e.g., Cu(BF₄)₂ or Zn(BF₄)₂)) may be used to manufacture a cured thermoset product for various applications. The cured product (i.e., the cross-linked product made from the curable formulation) of the present invention shows several improved and beneficial performance properties over conventional cured thermosets made from curable compositions containing conventional accelerators. When the accelerator is used in a curable composition or formulation, for example, the curable formulation provides a resultant cured composition with beneficial performance properties such as a higher Tg and better mechanical properties.

For example, the cured product of the present invention may advantageously have a high Tg. In general, the cured product of the present invention exhibits a glass transition temperature generally between about 60 °C and about 290 °C in one embodiment, between about 120 °C and about 230 °C in another embodiment, and between about 150 °C and about 200 °C in still another embodiment. The Tg of the cured product can be measured by the method described in the Examples herein below.

Another benefit that has been found using the curable composition containing the accelerator of the present invention is that some of the thermal and mechanical properties of the cured thermoset made from the composition are insensitive to moisture, that is, the thermal and mechanical properties of the cured thermoset do not change if the cured thermoset is subjected to moisture; or if water introduced into the formulation, for example by using components containing crystalline water. Advantageously, the composition properties in general are not related to the composition's content of moisture.

Still another advantage is that, since the curable composition is a suitable matrix in a variety of composite manufacturing processes, the composition can be cured in the presence of glass or carbon fiber wherein the fibers are either chopped or aligned.

The accelerator of the present invention can be used as an accelerator for epoxy resin-hardener curable compositions or formulations to accelerate the reaction between the epoxy resin and the hardener. In turn, the curable epoxy resin formulations which contain the accelerator of the present invention may be used in thermoset systems where conventional epoxy resins are used. For instance, some non-limiting examples of applications wherein the epoxy resin formulation containing the accelerator of present invention may be used include, for example, composites, coatings, adhesives, inks, encapsulation, casting, and any other applications that traditionally use a thermosetting resin and curing agent.

The beneficial properties of the cured product is made from the curable epoxy resin formulations which contain the accelerator of the present invention can also be measured and evaluated to determine the desired end use of the curable formulation and the cured product. In one preferred embodiment, the catalyzed epoxy-aromatic amine can be used in, for example, the application of fiber reinforced composite manufacture, include wet lay-up, infusion, filament winding, pultrusion, resin transfer molding (RTM), pre-pregs processes, injection molding and compression molding. The fiber reinforcements used for manufacturing fiber reinforced composites will typically be for example glass either as fibers or mats, carbon fibers and aramid fibers.

### EXAMPLES

The following examples and comparative examples further illustrate the present invention in detail but are not to be construed to limit the scope thereof.

In the following Examples, various terms and designations are used such as for example:
"DETDA" stands for diethyltoluenediamine.
"DSC" stands for differential scanning calorimetry.
"DMTA" stands for dynamic mechanical thermal analysis.
"DOE" stands for design of experiments.
D.E.R.383 is an epoxy resin having an EEW of 173-183 and commercially available from The Dow Chemical Company.
D.E.N. 431 is an epoxy novolac resin having an EEW of 172-179 and commercially available from The Dow Chemical Company.
ANCAMINE® Z is a blend of aromatic amine (1,3-phenylenediamine and 4,4'-diaminodiphenyl methane) used as curing agent for epoxy resin and commercially available from Air Products.
Jeffamine® D230 is a polyetheramine and commercially available from Huntsman Corporation.
Cu(BF₄)₂ is copper (II) tetrafluoroborate hydrate and commercially available from Sigma-Aldrich Chemical.
Zn(BF₄)₂ is zinc (II) tetrafluoroborate hydrate and commercially available from Sigma-Aldrich Chemical.
Cr(acac)₃ is chromium (III) acetylacetonate and commercially available from Sigma-Aldrich Chemical.
Cr(octoate)₃ is chromium (III) 2-ethylhexanoate and commercially available from Alfa Aesar, The Shepherd Chemical Company, or Dimension Technology Chemical Systems.

In the following Examples, standard analytical equipment and methods are used such as for example:

### Differential Scanning Calorimetry Measurements

Differential scanning calorimetry (DSC) analysis is performed using a Q2000 model DSC from TA Instruments which was equipped with an auto sampler and a refrigerated chiller system (RSC). Around 10 grams (g) of a formulated sample was mixed by using a FlackTek mixer (at 2,200 revolutions per minute [rpm] for 2 min). Then,
5-10 milligrams (mg) of the resulting sample was transferred to a hermetic aluminum pan (Hermetic aluminum pan is purchased from TA Instruments with part number: TA 900793-901/900794-901). The pan was sealed and placed in the auto-sample tray. A brief description of the method of the DSC analysis (a method known to those skilled in the art) is as follows:

| Stage | Condition | |
|---|---|---|
| 1 | Equilibrate at 0 °C | |
| 2 | Ramp 5.00 °C/min to 250 °C | |
| 3 | Mark end of cycle 1 | |
| 4 | Isotherm @ 250°C for 10 min | |
| 5 | Equilibrate at 30.00 °C | |
| 6 | Mark end of cycle 2 | |
| 7 | Ramp 10.00 °C/min to 250 °C | |
| 8 | End of method | |

### Dynamic Mechanical Thermal Analysis

Glass transition temperature (Tg) was determined by Dynamic Mechanical Thermal Analysis (DMTA), using a TA instrument Rheometer (Model: ARES). Rectangular samples (around 6.35 cm x 1.27 cm x 0.32 cm) were placed in solid state fixtures and subjected to an oscillating torsional load. The samples were thermally ramped from about 25 °C to about 300 °C at a rate of 3 °C/min and 1 Hertz (Hz) frequency.

### Mechanical Properties (Tensile and Fracture Toughness)

Tensile tests were performed using ASTM D638 (type I) method. Fracture toughness (K_{1C}) of materials was measured according to ASTM D5045 by a screw-driven material testing machine (Instron model 5567). Compact-tension geometry was used.

### Example 1 - Synthesis of Cu(BF₄)₂ and Cr(octoate)₃ Accelerator

An accelerator of Cu(BF₄)₂ and Cr(octoate)₃ was synthesized using the following general procedure; and using the amounts and compounds for the formulations described in Example 2 and Example 3.

Copper (II) tetrafluoroborate (Cu(BF₄)₂) hydrate is obtained from Sigma-Aldrich Chemical. The Cu(BF₄)₂ is combined with Cr(octoate)₃ at 70-80 °C under vigorously agitation for 2-3 hr. Various mixtures of Cu(BF₄)₂/ Cr(octoate)₃ with mixing ratio of 1:1, 1:3, 1:5, 1:7, 3:1, 3:5 and 3:7 were obtained to evaluate as an accelerator for an epoxy- amine composition.

### Example 2 - Acceleration of Diglycidyl Ether of Bisphenol A /Aromatic Amine Reaction Using Cu(BF₄)₂ and Cr(octoate)₃

An example of a curable composition comprising an epoxy, an aromatic amine and an accelerator of the present invention is shown in Table I. The accelerator used in this Example is the accelerator prepared as described in Example 1 and is a mixture of Cu(BF₄)₂ and Cr(octoate)₃. The accelerator is first dissolved in DETDA and then is used as the catalyzed aromatic amine (Part B). Diglycidyl ether of bisphenol A (D.E.R.383) is used as the epoxy resin (Part A). As shown in Table I, the epoxy resin and aromatic amine with the accelerator are mixed with 1:1 stoichiometric ratio.

**Table I - Curable Composition**

| PART A | | | | |
|---|---|---|---|---|
| | | Equivalent Weight | Weight Ratio | Weight |
| D.E.R. 383 | | 180.5 | 100 | 80.5 g |

| PART B | | | | |
|---|---|---|---|---|
| DETDA | | 44.6 | 98 | 19.1 g |
| Cu(BF₄)₂ | | | 1 | 0.2 g |
| Cr(octoate)₃ | | | 1 | 0.2 g |
| | | | | |
| TOTAL | | 45.5 | 100 | 100.0 g |
| | | | | |
| 1:1 Stoichiometric Mix Ratio / phr | | | | 25.2 |
| | | | | |
| Design Mix Ratio / phr | | | | 24.2 |
| A:B Stoichiometric Ratio | | | | 104 % |

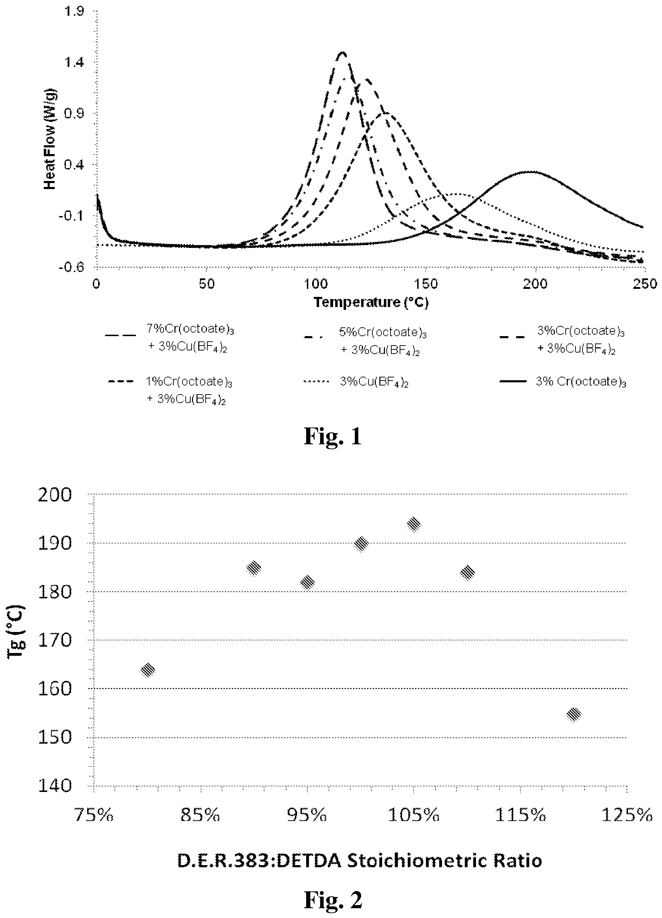

To test the reactivity of the aromatic amine with various accelerators, the exotherm peaks of D.E.R.383/DETDA with accelerator, Cu(BF₄)₂ and Cr(octoate)₃, are measured by DSC as shown in Figure 1 and Table II. Figure 1 shows an exotherm peak of D.E.R.383/DETDA with accelerator Cu(BF₄)₂ and Cr(octoate)₃ measured by DSC. "3% Cr(octoate)₃ and 3%Cu(BF₄)₂" refers to 3%Cr(octoate)₃ and 3 wt% Cu(BF₄)₂ in DETDA hardener. The exotherm peak temperature for D.E.R.383/DETDA with 3%Cu(BF₄)₂ is 164 °C. After adding Cr(octoate)₃ from 1 %, 3 %, 5 % to 7 % to DETDA with 3%Cu(BF₄)₂, the exotherm peak gradually shifts from 164 °C to 112 °C. The exotherm peaks are very sharp, indicating a fast-cure reaction. Tg of cured D.E.R.383/DETDA system with mixture of Cr(octoate)₃ and Cu(BF₄)₂ as accelerator remains high, in the range of 180 °C to 200 °C.

As a comparison, when only Cr(octoate)₃ is used as accelerator without addition of Cu(BF₄)₂, the exotherm peak temperature is as high as 194 °C and D.E.R.383/DETDA cannot be completely cured at 250 °C, meaning that Cr(octoate)₃ by itself cannot catalyze the reaction. The superior catalytic activity is due to the synergistic effect of the two components, Cr(octoate)₃ and Cu(BF₄)₂.

### Example 3 - Effect of the Concentration of the Accelerator Components Cu(B₄)₂ and Cr(octoate)₃ on Onset Temperatures and Exotherm Peak Temperatures

Design of experiments (DOE) was performed using the accelerator composition in an aromatic amine hardener. Even with very low amount of accelerator (1% Cr(octoate)₃ and 1%Cu(BF₄)₂, the exotherm peak temperature can be lowered by 53 °C (187 °C to 134 °C, a 28 % reduction) and onset temperature can be lowered by 41 °C
(144 °C to 103 °C, a 28 % reduction), relative to the corresponding composition without cure accelerator. The enthalpy and Tg of resin with accelerators is slightly higher than resin without accelerators.

**Table II - Thermal Properties vs. Cu(BF₄)₂ and Cr(octoate)₃ Concentrations Measured by DSC**

| D.E.R. 383 / DETDA | | | | |
|---|---|---|---|---|
| Catalyst | Tg (°C) | Onset Temperature (°C) | Exotherm Peak Temperature (°C) | Enthalpy (J/g) |
| No catalyst | 175 | 144 | 187 | 373 |
| 1%Cu(BF₄)₂ | 186 | 111 | 180 | 350 |
| 3%Cu(BF₄)₂ | 198 | 114 | 164 | 434 |
| 3%Cr(octoate)₃ | 156 | 148 | 194 | 216 |
| *1%Cu(BF₄)₂ 1%Cr(octoate)₃ | 196 | 103 | 134 | 397 |
| 1%Cu(BF₄)₂ 2%Cr(octoate)₃ | 192 | 100 | 126 | 417 |
| 1%Cu(BF₄)₂ 3%Cr(octoate)₃ | 180 | 94 | 124 | 384 |
| 1%Cu(BF₄)₂ 5%Cr(octoate)₃ | 179 | 88 | 118 | 382 |
| 3%Cu(BF₄)₂ 1%Cr(octoate)₃ | 198 | 98 | 133 | 438 |
| 3%Cu(BF₄)₂ 3%Cr(octoate)₃ | 204 | 96 | 123 | 430 |
| 3%Cu(BF₄)₂ 5%Cr(octoate)₃ | 192 | 90 | 115 | 414 |
| 3%Cu(BF₄)₂ 7%Cr(octoate)₃ | 191 | 89 | 112 | 423 |

| | | | | |
|---|---|---|---|---|
| *1%Cu(BF₄)₂ -1%Cr(octoate)₃ refers to 1 wt % Cu(BF₄)₂ and 1 wt % Cr(octoate)₃ in DETDA. | | | | |

### Example 4 -Gel Time of Formulations at Various Cu(BF₄)₂ and Cr(octoate)₃ Accelerator Concentrations

To further investigate the latency and reactivity of resins with accelerators, the gel time of D.E.R.383/DETDA with various accelerators was measured at 25 °C and 100 °C, as shown in Table III. The gel time of D.E.R.383/ DETDA with accelerators at
25 °C is over 30 hr, indicating that this resin system still has a good pot life and latency. Gel time at 100 °C is 96 min for D.E.R.383/DETDA with 1%Cu(BF₄)₂. If a mixture of Cu(BF₄)₂ and Cr(octoate)₃ is used as an accelerator, the gel time at 100 °C drops to 18 min with 1%Cu(BF₄)₂ and 1%Cr(octoate)₃ as the accelerator, and to only 6 min with
1% Cu(BF₄)₂ and 2%Cr(octoate)₃. At elevated temperature (150 °C), the gel time of D.E.R.383/ DETDA with 1%Cu(BF₄)₂ and 2%Cr(octoate)₃ is only 59 s. The results of this example further demonstrate that the novel accelerators of the present invention can significantly improve the reactivity of D.E.R.383/ DETDA.

**Table III - Gel Time of D.E.R.383/DETDA with Various Accelerators**

| D.E.R.383/DETDA | | | |
|---|---|---|---|
| Catalyst | Gel Time at 25 °C (hours) | Gel Time at 100 °C (minutes) | Gel Time at 150 °C (seconds) |
| 3%Cu(BF₄)₂ | 10.5 | 54 | 431 |
| 1%Cu(BF₄)₂ 1%Cr(octoate)₃ | 49.8 | 18 | 198 |
| 1%Cu(BF₄)₂ 2%Cr(octoate)₃ | 39.8 | 6 | 59 |

### Example 5 - Effect of Epoxy Amine Stoichiometry on Tg Using Cu(BF₄)₂ and Cr(octoate)₃

Homo-polymerization of an epoxy normally results in a drop of Tg and mechanical properties. To determine whether the accelerated reaction shown in DSC is due to the acceleration of homo-polymerization of an epoxy, the following analysis was performed: using 1%Cu(BF₄)₂ and 1%Cr(octoate)₃ as an accelerator, the Tg of a cured polymer was measured at various stoichiometric ratios of D.E.R.383/DETDA. If an accelerator only catalyzes homo-polymerization of an epoxy, the Tg of the cured polymer will not be affected by the stoichiometric ratio of D.E.R.383/DETDA.

Figure 2 shows the Tg of a cured polymer with various stoichiometric ratio of D.E.R.383/DETDA catalyzed by 1%Cu(BF₄)₂ and 1%Cr(octoate)₃. The Tg was analyzed by DSC. As shown in Figure 2, D.E.R.383/DETDA with about a 1:1 stoichiometric ratio provides the highest Tg, which supports the findings that the novel accelerator of the present invention improves the reactivity between an epoxy and an hardener, rather than accelerating the homo-polymerization of the epoxy.

### Example 6 - Preparation and Mechanical Characterization of Clear Casts Using DER 383, DETDA and Cu(BF₄)₂ and Cr(octoate)₃ Accelerators

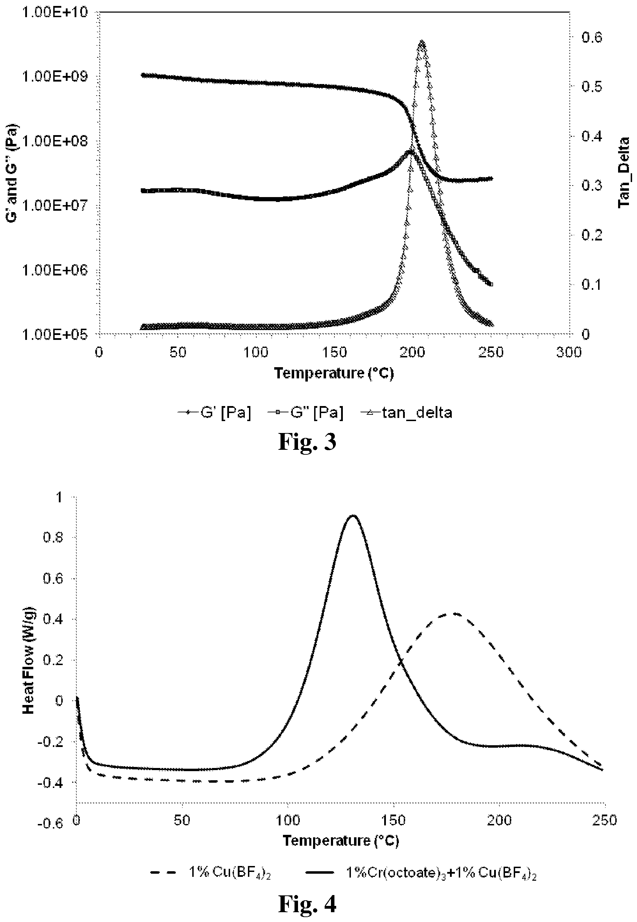

Mechanical properties of the cured D.E.R.383/DETDA system with the novel accelerator are tested by making clear casting plaques. The curing conditions include curing the resin at 100 °C for 1 hr and 180 °C for 1 hr. The product, DETDA with
3 % Cu(BF₄)₂), is used as a benchmark (curing conditions: 100 °C for 1 hr and 180 °C for
2 hr). The properties of tensile modulus, fracture toughness (K_{1c}) and Tg (TanΔ) of D.E.R.383/DETDA with the novel accelerator are comparable to the properties of a system containing D.E.R.383/DETDA with 3%Cu(BF₄)₂ as the accelerator, with a slightly drop in tensile. Overall, the accelerator of the present invention does lead to the formation of a cured epoxy with a higher Tg and high modulus. Figure 3 shows DMTA of D.E.R.383/DETDA with accelerator 1%Cu(BF₄)₂ and 1 %Cr(octoate)₃.

**Table IV - Mechanical Properties of D.E.R. 383/DETDA with Cu(BF₄)₂ and Cr(octoate)₃ Accelerators**

| Properties | D.E.R.383/DETDA | |
|---|---|---|
| | 3%Cu(BF₄)₂ as accelerators | 1%Cu(BF₄)₂ and 1%Cr(octoate)₃ as accelerators |
| Tensile strength | 68.5 MPa | 56.1 MPa |
| Tensile modulus | 2.61 GPa | 2.60 GPa |
| K_{1C} | 0.45 MPa·m^{1/2} | 0.50 MPa·m^{1/2} |
| Tg (TanΔ) | 202 °C | 206 °C |

### Example 7 - Acceleration of Novolac resin / DETDA Reaction Using Cu(BF₄)₂ and Cr(octoate)₃

In this Example 7, an accelerator of the present invention prepared as described in Example 1 -- Cu(BF₄)₂ and Cr(octoate)₃) -- was used to accelerate the reaction between an aromatic amine, DETDA hardener, and an epoxy novolac resin, D.E.N. 431. D.E.N. 431 is an epoxy novolac resin having an EEW of 172-179 and commercially available from The Dow Chemical Company. Figure 4 shows the exotherm peak of D.E.N.431/DETDA with the accelerator, 1 %Cu(BF₄)₂ and 1%Cr(octoate)₃, as measured by DSC. As shown in Figure 4, when curing D.E.N. 431 with the DETDA hardener, and using an accelerator containing 1%Cr(octoate)₃ and 1 % Cu(BF₄)₂, the use of the accelerator can lower the exotherm peak temperature of the resin composition by 45 °C (from 176 °C to 131 °C, a 26 % reduction) compared to a corresponding resin composition with only 1%Cu(BF₄)₂ as an accelerator.

### Example 8 - Synthesis of Accelerator of Zn(BF₄)₂ and Cr(octoate)₃

An accelerator of Zn(BF₄)₂ and Cr(octoate)₃ was synthesized using the following general procedure; and using the amounts and compounds for the formulations described in Example 9 herein below.

Zinc (II) tetrafluoroborate (Zn(BF₄)₂) hydrate and diethylene glycol are obtained from Sigma-Aldrich. The Zn(BF₄)₂ is combined with Cr(octoate)₃ and diethylene glycol at 25 °C under vigorously agitation for 2 min. The weight percentage of Zn(BF₄)₂, Cr(octoate)₃ and diethylene glycol in the accelerator system is 40 %, 40 % and 20 %, respectively. The prepared mixtures of Zn(BF₄)₂ and Cr(octoate)₃/diethylene glycol is used as accelerator for an epoxy-aromatic amine reaction. In this Example 8, Zn(BF₄)₂ and Cr(octoate)₃ are the essential components for the accelerator; and diethylene glycol is the carrier solvent.

### Example 9 - Acceleration of Diglycidyl Ether of Bisphenol A /DETDA Reaction Using Zn(BF₄)₂ and Cr(octoate)₃Accelerators

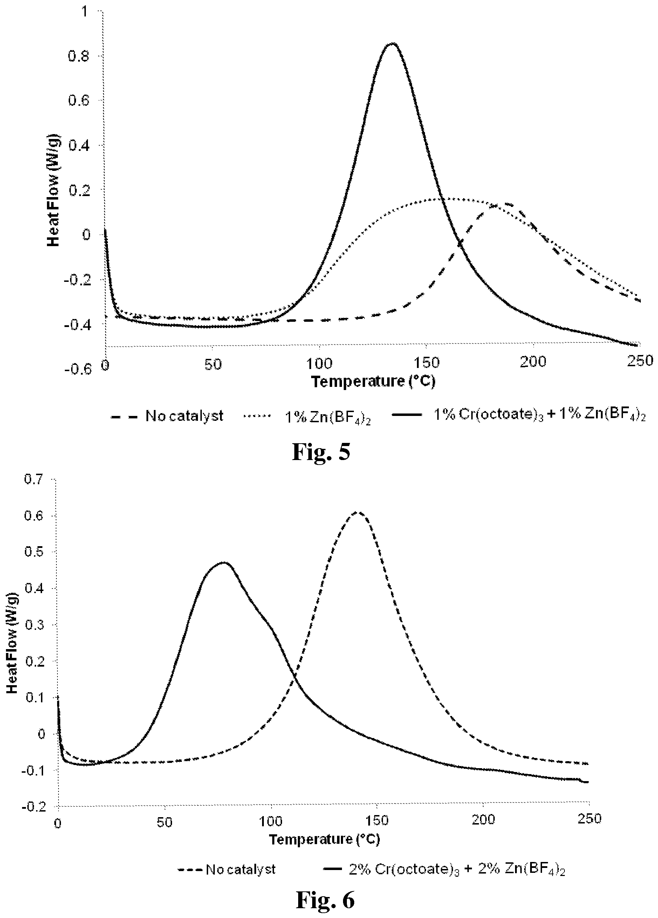

In this Example 9, zinc (II) tetrafluoroborate (Zn(BF₄)₂) is used together with Cr(octoate)₃ as an accelerator. The accelerator is prepared as described in Example 8. Figure 4 shows exotherm peak of D.E.R.383/DETDA with accelerator 1%Zn(BF₄)₂ and 1%Cr(octoate)₃ measured by DSC. As shown in Figure 5, the accelerator containing 1%Zn(BF₄)₂ and 1%Cr(octoate)₃ can significantly speed up an epoxy-aromatic amine reaction compared to a corresponding resin formulation containing no catalyst or 1%Zn(BF₄)₂ alone.

### Example 10 - Acceleration of Diglycidyl Ether of Bisphenol A /ANCAMINE® Z Reaction Using Zη(BE₄)₂ and Cr(octoate)₃ Accelerators

In addition to diethyltoluenediamine (DETDA), other aromatic amines are also tested, with one example shown as being ANCAMINE® Z. ANCAMINE® Z is a blend of an aromatic amine (1,3-phenylenediamine and 4,4'-diaminodiphenyl methane) and commercially available from Air Products. Figure 6 shows exotherm peak of D.E.R.383/ANCAMINE® Z with accelerator 1% Zn(BF₄)₂ and 1%Cr(octoate)₃ measured by DSC. The accelerator (1%Zn(BF₄)₂ and 1%Cr(octoate)₃) can lower the exotherm peak temperature of the resin composition by 44 °C (from 142 °C to 98 °C, a 31 % reduction), as well as lower the onset temperature of the resin composition by 46 °C (from 101 °C to
55 °C, a 45 % reduction).

### Example 11 - Acceleration of Diglycidyl Ether of Bisphenol A / Jeffamine® D230 (Polyetheramine) Reaction Using Zn(BF₄)₂ and Cr(octoate)₃

In this Example 11, an accelerator of Zn(BF₄)₂ and Cr(octoate)₃ was synthesized using the procedure shown in Example 8; and using the amounts and compounds for the formulations described as follows.

An example of a curable composition comprising an epoxy, a polyetheramine and an accelerator of the present invention is shown in Table VI. The accelerator used in this Example is the accelerator prepared as described in Example 8 and is a mixture of Zn(BF₄)₂ and Cr(octoate)₃. The polyetheramine used in this example is Jeffamine® D230, which is commercially available from Huntsman Corporation. The accelerator is first dissolved in polyetheramine and is used as the catalyzed polyetheramine (Part B). Diglycidyl ether of bisphenol A (D.E.R.383) is used as the epoxy resin (Part A). As shown in Table VI, the epoxy resin and polyetheramine with the accelerator are mixed with 1:1 stoichiometric ratio.

The gel time at 100°C and exotherm peak of D.E.R.383/ Jeffamine® D230 with and without accelerator (Zn(BF₄)₂ and Cr(octoate)₃) were measured to test the reaction reactivity. As shown in Table VII, the accelerator (Zn(BF₄)₂ and Cr(octoate)₃) can shorten the gel time from 7 min 30 sec to 3 min 50 sec at 100 °C. Meanwhile, the accelerator can lower the exotherm peak temperature by 15 °C (from 129 °C to 114 °C, a 11.6 % reduction) and lower the onset temperature by 25 °C (from 89 °C to 65 °C, a 28 % reduction).

**Table VI-Curable Composition**

| PART A | | | |
|---|---|---|---|
| | Equivalent Weight | Weight Ratio | Weight |
| D.E.R.383 | 180.5 | 100 % | 22.22 |
| | | | |

| PART B | | | |
|---|---|---|---|
| Jeffamine® D230 | 60 | 95 % | 7.38 |
| 2%Cr(octoate)₃ | | 2 % | 0.16 g |
| 2%Zn(BF₄)₂ | | 2 % | 0.16 g |
| 1 % Diethyl glycol | | 1 % | 0.08 g |
| Total | 63.2 | 100 % | 7.78 g |
| Total | | | 30 g |
| 1:1 Stoichiometric Mix Ratio / phr | | | 35.0 |
| Design Mix Ratio / phr | | | 35.0 |
| A:B Stoichiometric Ratio | | | 100.0 % |

**Table VII - Gel Time and Thermal Properties of D.E.R.383/Jeffamine® D230 with Accelerator 2% Zn(BF₄)₂ and 2%Cr(octoate)₃ Measured by DSC**

| D.E.R.383/Jeffamine® D230 | | | | | |
|---|---|---|---|---|---|
| Accelerator | Gel time at 100 °C | Tg | Onset Temperature | Exotherm Temp Peak | Enthalpy |
| No Accelerator | 7 min 30 sec | 92 °C | 89 °C | 129 °C | 422 J/g |
| 2%Zn(BF₄)₂ | 3 min 50 sec | 93 °C | 65 °C | 114 °C | 327 J/g |
| 2%Cr(octoate)₃ | | | | | |

### Example 12 - Synthesis of Accelerator of Zn(BF₄)₂ and Cr(acac)₃

In this Example 12, an accelerator of Zn(BF₄)₂ and Cr(acac)₃ was synthesized using the following general procedure; and using the amounts and compounds for the formulations described as follows.

In addition to Cr(octoate)₃, other chromium (III) carboxylate are also tested, with chromium (III) acetylacetonate as an example. Chromium (III) acetylacetonate (Cr(acac)₃) is commercially available from Sigma-Aldrich Chemical. Zinc(II) tetrafluoroborate hydrate, Chromium (III) acetylacetonate (Cr(acac)₃) and diethylene glycol are obtained from Sigma-Aldrich. The Zn(BF₄)₂ is combined with Cr(acac)₃ and diethylene glycol at 25 °C under vigorously agitation for 1 hr. The weight percentage of Zn(BF₄)₂, Cr(acac)₃ and diethylene glycol in the accelerator system is
33.3 %, 33.3 % and 33.3 %, respectively. The prepared mixtures of Zn(BF₄)₂, Cr(acac)₃ and diethylene glycol are used as an accelerator for an epoxy-aromatic amine reaction. In this Example, Zn(BF₄)₂ and Cr(acac)₃ are essential components for the accelerator and diethylene glycol is the carrier solvent.

### Example 13 - Acceleration of D.E.R.383/DETDA Reaction Using Zn(BF₄)₂ and Cr(acac)₃

The 1%Zn(BF₄)₂ and 1%Cr(acac)₃ combination is used as an accelerator for a D.E.R.383/DETDA reaction. Table VIII shows the thermal properties of D.E.R.383/DETDA without an accelerator (control) and with an accelerator 1%Zn(BF₄)₂ and 1%Cr(acac)₃ as measured by DSC. The accelerator (1%Zn(BF₄)₂ and 1%Cr(acac)₃) can lower the exotherm peak temperature of a resin composition by 39 °C (from 187 °C to 148 °C, a 21 % reduction), as well as lower the onset temperature of a resin composition by 67 °C (from 144 °C to 77 °C, a 46.5 % reduction).

**Table VIII - Thermal Properties of D.E.R.383/DETDA with Accelerator 1 %Zn(BF₄)₂ and 1%Cr(acac)₃ Measured by DSC**

| D.E.R. 383 / DETDA | | | | |
|---|---|---|---|---|
| Accelerator | Tg (°C) | Onset Temperature (°C) | Exotherm Peak Temperature (°C) | Enthalpy (J/g) |
| No accelerator | 175 | 144 | 187 | 373 |
| 1%Zn(BF₄)₂ 1%Cr(acac)₃ | 194 | 77 | 148 | 382 |

As shown in the above Examples, the novel accelerator of present invention containing chromium (III) carboxylate (e.g., Cr(octoate)₃) and a salt where the cation of the salt is a metal or an onium cation with an anion (e.g., Cu(BF₄)₂ or Zn(BF₄)₂) for an epoxy-amine resin can dramatically speed up the reaction between the epoxy and the aromatic amine, while maintaining the excellent mechanical and chemical properties of cured materials. The accelerators of the present invention can significantly shorten the curing profile and reduce processing cost when amine is utilized as hardener, and broaden the application area of amine hardener.

### Example 14 - Comparison of Peak Exotherm Temperatures Using No Accelerator, Only Cu(BF₄)₂ or Cu(BF₄)₂ in Combination with Cr(octoate)₃, Zn(octoate)₂, Mo(octoate)₃ in DER383 and DETDA Reaction

It is known in the prior art that experimental conditions for example DSC scan rates can affect the Tg and exotherm onset temperatures of a resultant product. During the development of the present invention a 5 °C/min scan rate was use. However, since it is common in the prior art to conduct DSC experiments at 10 °C/min scan rate, for comparative purposes, this Example describes and compares exotherm peak temperatures determined at a 10 °C/min scan rate.

DER 383 and DETDA were used at 1:1 stoichiometric mix ratio as described in Table I. Accelerators were mixed in DETDA at concentrations listed in Table IX. Cu(BF₄)₂ alone caused only a 17 % shift in the peak exotherm temperature compared to the uncatalyzed system. However, the use of a combination of Cu(BF₄)₂ and the various octoates caused significant shifts in the peak exotherms, namely 42 % for Cr(octoate)₃,
25 % for Zn(octoate)₂ and 25 % for Mo(octoate)₃ compared to the uncatalyzed system. But the shifts in the peak exotherms were also noteworthy if the exotherms were compared to the reaction that was catalyzed with Cu(BF₄)₂ alone. In this case the shifts in the peak exotherms was 30 % for Cr(octoate)₃, 10 % for Zn(octoate)₂ and 9 % for Mo(octoate)₃. These shifts illustrate that using a combination of Cu(BF₄)₂ and the octoates result in a faster accelerator than Cu(BF₄)₂ alone. The results of this Example are described in Table IX.

**Table IX - Comparison of Peak Exotherm Temperatures of the Curing Reaction of D.E.R. 383 and DETDA Using Various Accelerators, Determined by DSC a 10 °C/min Scan Rate**

| Cu(BF₄)₂ (w %) | Octoate (w %) | Peak exotherm temperature (°C) | % decrease from uncatalyzed | % decrease from Cu(BF₄)₂ catalyzed |
|---|---|---|---|---|
| no | no | 208 | | |
| 3 | no | 173 | 17 | |
| 3 | 5%Cr(octoate)₃ | 121 | 42 | 30 |
| 3 | 5% Zn(octoate)₂ | 155 | 25 | 10 |
| 3 | 5% Mo(octoate)₃ | 157 | 25 | 9 |

### Example 15 - Comparison of Tg of DER 383 - DETDA System Catalyzed by Cu(BF₄)₂ or CuBF₄)₂ and Cr(octoate)₃ at 150 °C Cure Temperature

DER 383 and DETDA was mixed at 1:1 equivalent ratio as described in Table I. This mixture was catalyzed in two different ways, one with 0.6 % Cu(BF₄)₂ and the other with a combination of 0.6 % Cu(BF₄)₂ and 2 % Cr(octoate)₃, where the percentages refer to the total composition. 10 g portions of the DER 383-DETDA-accelerator mixtures were placed in Aluminum dishes and cured in a 150 °C oven for 5, 10 and 60 min. Tg of the cured thermosets were measured by DSC (10 °C/min scan rate) and listed in Table X. As the data in Table X illustrates, the combined use of Cu(BF₄)₂ and Cr(octoate)₃ significantly sped up the curing reaction and even after 60 min cure time provided a 57 °C higher Tg, compared to the use of Cu(BF₄)₂ alone. To reach the same Tg with Cu(BF₄)₂ alone would require a much longer curing time or a higher temperature.

**Table X - Tg of DER 383-DETDA Thermosets Cured for various times at 150 °C**

| Cure Time (minutes) | 5 | 10 | 60 |
|---|---|---|---|
| Glass Transition Temperature | Tg (°C) | Tg (°C) | Tg (°C) |
| 0.6% Cu(BF₄)₂ | 51 | 94 | 109 |
| 0.6% Cu(BF₄)₂ 2% Cr(octoate)₃ | 144 | 148 | 166 |

## Claims

1. An accelerator composition for epoxy resin formulations, said accelerator composition comprising:
(i) at least one transition metal complex, wherein the transition metal complex includes:
(a) a transition metal ion; and
(b) a ligand, wherein the ligand is an oxygen donor ligand; and
(ii) at least one salt; wherein the salt includes:
(c) a cation, wherein the cation includes a metal ion or an onium ion; and
(d) an anion selected from the group consisting of BF₄⁻, PF₆⁻, AsF₆⁻, SbF₆⁻, FeC₄⁻, SnCl₆⁻, BiCl₅⁻, AlF₆⁻, GaCl₄⁻, InF₄⁻, TiF₆⁻, ZrF₆⁻, ClO₄⁻, (CH₃)₂(C₆H₅)₂B⁻, (C₆H₅)₄B⁻, (C₄H₇)₄B⁻, and mixtures thereof.

2. The accelerator composition of claim 1, wherein:
the transition metal ion, component (a), is chromium (III), Zn (II), molybdenum (III), or mixtures thereof,
the oxygen donor ligand, component (b) is derived from a beta-diketone or a carboxylate ion derived from an organic acid, the carboxylate ion being derived from an organic acid being a substituted or unsubstituted, a linear or branch-chained aralkyl or alkyl carboxylate containing C₂-C₂₀ carbon atoms; a substituted or unsubstituted aryl carboxylic acid; or mixtures thereof, and
the concentration of the at least one transition metal complex is from 0.01 weight percent to 15 weight percent referring to the total accelerator composition.

3. The accelerator composition of claim 1, wherein the at least one transition metal complex is chromium (III) octoate, chromium (III) 2-ethylhexanoate, chromium (III) acetate, chromium(III) heptanoate, formulated chromium (III) carboxylate complexes, zinc (II) octoate, zinc (II) acetyl, molybdenum (III) octoate, or mixtures thereof.

4. The accelerator composition of claim 1, wherein the cation of the salt, component (c), is the metal ion, and a metal of the metal ion is lithium, sodium, magnesium, calcium, aluminum, iron, cobalt, nickel, copper, zinc, tin, antimony, cadmium, lead, bismuth, or mixtures thereof.

5. The accelerator composition of claim 1, wherein the cation of the salt, component (c), is the onium cation, and the onium ion is an alkyl, an aralkyl, or an aryl ammonium ion; an alkyl, an aralkyl, or an aryl phosphonium ion; or mixtures thereof.

6. The accelerator composition of claim 1, wherein the concentration of the at least one salt is from 0.01 weight percent to 15 weight percent referring to the total accelerator composition.

7. The accelerator composition of claim 1, further comprising a solubilizing agent, the solubilizing agent being an alcohol, a glycol, a glycol ether, a ketone, or mixtures thereof.

8. A process for preparing the accelerator composition claimed in any one of claims 1 to 7, the process comprising admixing:
(i) the at least one transition metal complex; and
(ii) the at least one salt.

9. A curable epoxy resin composition, comprising:
(A) at least one epoxy resin;
(B) at least one curing agent; and
(C) the accelerator composition as claimed in any one of claims 1 to 7.

10. A process for preparing a curable epoxy resin composition, the process comprising admixing:
(A) at least one epoxy resin;
(B) at least one curing agent; and
(C) the accelerator composition as claimed in any one of claims 1 to 7.

## Patentansprüche

1. Eine Beschleunigerzusammensetzung für Epoxidharzformulierungen, wobei die Beschleunigerzusammensetzung Folgendes beinhaltet:
(i) mindestens einen Übergangsmetallkomplex, wobei der Übergangsmetallkomplex Folgendes umfasst:
(a) ein Übergangsmetallion; und
(b) einen Liganden, wobei der Ligand ein Sauerstoffdonorligand ist; und
(ii) mindestens ein Salz; wobei das Salz Folgendes umfasst:
(c) ein Kation, wobei das Kation ein Metallion oder ein Oniumion umfasst; und
(d) ein Anion, das aus der Gruppe ausgewählt ist, die aus BF₄⁻, PF₆⁻, AsF₆⁻, SbF₆⁻, FeCl₄⁻, SnCl₆⁻, BiCl₅⁻, AlF₆⁻, GaCl₄⁻, InF₄⁻, TiF₆⁻, ZrF₆⁻, ClO₄⁻, (CH₃)₂(C₆H₅)₂B⁻, (C₆H₅)₄B⁻, (C₄H₇)₄B⁻ und Mischungen davon besteht.

2. Beschleunigerzusammensetzung gemäß Anspruch 1, wobei:
das Übergangsmetallion, Komponente (a), Chrom(III), Zn(II), Molybdän(III) oder Mischungen davon ist,
der Sauerstoffdonorligand, Komponente (b), von einem beta-Diketon oder einem Carboxylation, abgeleitet von einer organischen Säure, abgeleitet ist, wobei das Carboxylation von einer organischen Säure abgeleitet ist, die ein substituiertes oder nicht substituiertes, ein lineares oder verzweigtkettiges Aralkyl- oder Alkylcarboxylat, enthaltend C₂-C₂₀-Kohlenstoffatome, eine substituierte oder nicht substituierte Arylcarbonsäure oder Mischungen davon ist, und
die Konzentration des mindestens einen Übergangsmetallkomplexes 0,01 Gewichtsprozent bis 15 Gewichtsprozent, bezogen auf die gesamte Beschleunigerzusammensetzung, beträgt.

3. Beschleunigerzusammensetzung gemäß Anspruch 1, wobei der mindestens eine Übergangsmetallkomplex Chrom(III)-octoat, Chrom(III)-2-ethylhexanoat, Chrom(III)-acetat, Chrom(III)-heptanoat, formulierte Chrom(III)-carboxylatkomplexe, Zink(II)-octoat, Zink(II)-acetyl, Molybdän(III)-octoat oder Mischungen davon ist.

4. Beschleunigerzusammensetzung gemäß Anspruch 1, wobei das Kation des Salzes, Komponente (c), das Metallion ist und ein Metall des Metallions Lithium, Natrium, Magnesium, Calcium, Aluminium, Eisen, Kobalt, Nickel, Kupfer, Zink, Zinn, Antimon, Cadmium, Blei, Bismut oder Mischungen davon ist.

5. Beschleunigerzusammensetzung gemäß Anspruch 1, wobei das Kation des Salzes, Komponente (c), das Oniumkation ist und das Oniumion ein Alkyl-, ein Aralkyl- oder ein Arylammoniumion, ein Alkyl-, ein Aralkyl- oder ein Arylphosphoniumion oder Mischungen davon ist.

6. Beschleunigerzusammensetzung gemäß Anspruch 1, wobei die Konzentration des mindestens einen Salzes 0,01 Gewichtsprozent bis 15 Gewichtsprozent, bezogen auf die gesamte Beschleunigerzusammensetzung, beträgt.

7. Beschleunigerzusammensetzung gemäß Anspruch 1, die ferner einen Lösungsvermittler beinhaltet, wobei der Lösungsvermittler ein Alkohol, ein Glykol, ein Glykolether, ein Keton oder Mischungen davon ist.

8. Ein Verfahren zum Herstellen der Beschleunigerzusammensetzung gemäß einem der Ansprüche 1 bis 7, wobei das Verfahren das Vermischen von Folgendem beinhaltet:
(i) dem mindestens einen Übergangsmetallkomplex; und
(ii) dem mindestens einen Salz.

9. Eine härtbare Epoxidharzzusammensetzung, die Folgendes beinhaltet:
(A) mindestens ein Epoxidharz;
(B) mindestens ein Härtungsmittel; und
(C) die Beschleunigerzusammensetzung gemäß einem der Ansprüche 1 bis 7.

10. Ein Verfahren zum Herstellen einer härtbaren Epoxidharzzusammensetzung, wobei das Verfahren das Vermischen von Folgendem beinhaltet:
(A) mindestens einem Epoxidharz;
(B) mindestens einem Härtungsmittel; und
(C) der Beschleunigerzusammensetzung gemäß einem der Ansprüche 1 bis 7.

## Revendications

1. Une composition d'accélérateur pour des formulations de résine époxy, ladite composition d'accélérateur comprenant :
(i) au moins un complexe de métal de transition, le complexe de métal de transition incluant :
(a) un ion de métal de transition ; et
(b) un ligand, le ligand étant un ligand donneur d'oxygène ; et
(ii) au moins un sel ; le sel incluant:
(c) un cation, le cation incluant un ion de métal ou un ion onium ; et
(d) un anion sélectionné dans le groupe constitué de BF₄⁻, PF₆⁻, AsF₆⁻, SbF₆⁻, FeCl₄⁻, SnCl₆⁻, BiCl₅⁻, AlF₆⁻, GaCl₄⁻, InF₄⁻, TiF₆⁻, ZrF₆⁻, ClO₄⁻, (CH₃)₂(C₆H₅)₂B⁻, (C₆H₅)₄B⁻, (C₄H₇)₄B⁻, et de mélanges de ceux-ci.

2. La composition d'accélérateur de la revendication 1, dans laquelle :
l'ion de métal de transition, constituant (a), est le chrome (III), le Zn (II), le molybdène (III), ou des mélanges de ceux-ci,
le ligand donneur d'oxygène, constituant (b), est dérivé d'une bêta-dicétone ou d'un ion carboxylate dérivé d'un acide organique, l'ion carboxylate étant dérivé d'un acide organique qui est un aralkyle ou carboxylate d'alkyle substitué ou non substitué, linéaire ou à chaîne ramifiée contenant des atomes de carbone en C₂-C₂₀ ; un acide carboxylique d'aryle substitué ou non substitué ; ou des mélanges de ceux-ci, et
la concentration de l'au moins un complexe de métal de transition va de 0,01 pour cent en poids à 15 pour cent en poids si l'on se rapporte à la composition d'accélérateur totale.

3. La composition d'accélérateur de la revendication 1, dans laquelle l'au moins un complexe de métal de transition est l'octoate de chrome (III), le 2-éthylhexanoate de chrome (III), l'acétate de chrome (III), l'heptanoate de chrome (III), des complexes carboxylate de chrome (III) formulés, l'octoate de zinc (II), l'acétyle de zinc (II), l'octoate de molybdène (III), ou des mélanges de ceux-ci.

4. La composition d'accélérateur de la revendication 1, dans laquelle le cation du sel, constituant (c), est l'ion de métal, et un métal de l'ion de métal est le lithium, le sodium, le magnésium, le calcium, l'aluminium, le fer, le cobalt, le nickel, le cuivre, le zinc, l'étain, l'antimoine, le cadmium, le plomb, le bismuth, ou des mélanges de ceux-ci.

5. La composition d'accélérateur de la revendication 1, dans laquelle le cation du sel, constituant (c), est le cation onium, et l'ion onium est un ion alkyl, aralkyl, ou aryl ammonium ; un ion alkyl, aralkyl, ou aryl phosphonium ; ou des mélanges de ceux-ci.

6. La composition d'accélérateur de la revendication 1, dans laquelle la concentration de l'au moins un sel va de 0,01 pour cent en poids à 15 pour cent en poids si l'on se rapporte à la composition d'accélérateur totale.

7. La composition d'accélérateur de la revendication 1, comprenant en outre un agent de solubilisation, l'agent de solubilisation étant un alcool, un glycol, un éther de glycol, une cétone, ou des mélanges de ceux-ci.

8. Un procédé pour préparer la composition d'accélérateur revendiquée dans n'importe laquelle des revendications 1 à 7, le procédé comprenant l'admixtion :
(i) de l'au moins un complexe de métal de transition ; et
(ii) de l'au moins un sel.

9. Une composition de résine époxy durcissable, comprenant :
(A) au moins une résine époxy ;
(B) au moins un agent de durcissement ; et
(C) la composition d'accélérateur telle que revendiquée dans n'importe laquelle des revendications 1 à 7.

10. Un procédé pour préparer une composition de résine époxy durcissable, le procédé comprenant le mélange par adjonction :
(A) d'au moins une résine époxy ;
(B) d'au moins un agent de durcissement ; et
(C) de la composition d'accélérateur telle que revendiquée dans n'importe laquelle des revendications 1 à 7.
